# EUROPEAN PATENT SPECIFICATION

(11) **EP 0 413 993 B1**
(45) Date of publication and mention of the grant of the patent: **23.02.1994**
(21) Application number: 90114515.1
(22) Date of filing: 27.07.1990
(51) Int. Cl.: H01G 9/00

(54) **Electrical double-layer capacitor**
Elektrischer Doppelschichtkondensator
Condensateur électrique à double couche

(30) Priority: 23.08.1989 JP 216968/89
(43) Date of publication of application: 27.02.1991
(73) Proprietor: Isuzu Motors Limited, Shinagawa-ku, Tokyo 140 (JP)
(72) Inventor: Kurabayashi, Ken, Chigasaki-shi, Kanagawa (JP); Tsuchiya, Yoshinobu, Fujisawa-shi, Kanagawa (JP); Yoshida, Akio, Kamakura-shi, Kanagawa (JP); Koizumi, Hitoshi, Hiratsuki-shi, Kanagawa (JP)
(74) Representative: Roth, Ronald, Dipl.-Ing.

(56) References cited:
- DE-A- 3 422 863
- JP-A-56 070 623
- PATENT ABSTRACTS OF JAPAN vol. 13, no. 386 (E-812)(3734) 25 August 1989 & JP-A-01136326
- PATENT ABSTRACTS OF JAPAN vol. 13, no. 493 (E-842)(3841) 08 November 1989 & JP-A-01196807
- PATENT ABSTRACTS OF JAPAN vol. 12, no. 186 (C-500) 31 May 1988 & JP-A-62292612

## Description

### 2. Technical Field

The present invention relates to an electrical double-layer capacitor as for instance known from JP-A-01 136 326 wherein the structure of the polarising electrode has been improved.

### 3. Background Art

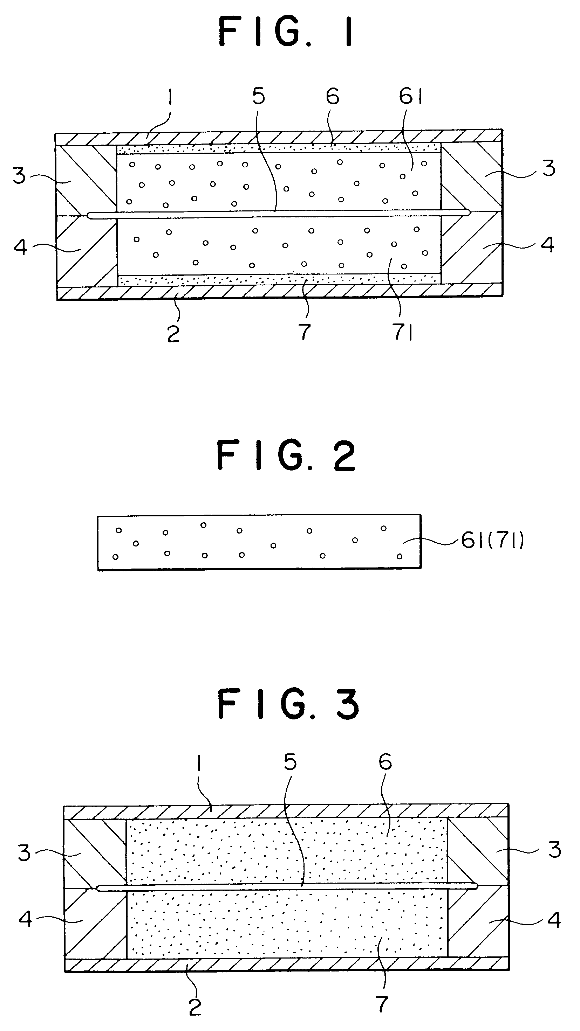

In Fig.3 is shown a conventional electrical double-layer capacitor cell. In Fig.3, numeral 1 and 2 denote collecting electrodes, 3 and 4 gaskets, 5 a separator, and 6 and 7 paste-like polarising electrodes.

As the collecting electrodes 1 and 2 are used conductive rubber sheets, and as the gaskets 3 and 4 are used insulating rubber. The paste-like polarising electrodes 6 and 7 are such ones made of paste-like active carbon powder by immersing dilute sulfuric acid therein. For the separator 5, is used a porous plastic film which passes through ions, but does not pass through the active carbon particles.

In order to make the contact of the active carbon paraticles to each other good, and to make the contact of the collecting electrode 1 to the paste-like polarising electrode 6 and the collecting electrode 2 and the paste-like polarising electrode 7 good, pressure is applied on the collecting electrodes 1 and 2. In order not to be destructed by this pressure, the materials for the collecting electrodes 1 and 2 and for the gaskets 3 and 4 should be such ones which have elasticity.

In order to make the capacity of such an electrical double-layer capacitor cell large, it is carried out to increase the specific surface area ( usually, 1000 to 2000 m² /g ) of the active carbon forming the polarising electrode, and the bulk density in the case when it has been filled is made large.

On the other hand, since the polarising electrode is difficultly handled in such a state as it is in a paste-like form, there has been proposed such a method in which it is sintered to become solid plate-like form ( for example, the official publication of the Japanese Patent Application Laid-Open No. 292612/1987 ). When it is formed in a solid plate-like state, there is also such an advantage that the bulk density is enhanced and the capacity is increased, and together with that, the contact of the active carbon particles to each other becomes denser to decrease the contact resistance.

### (Problem)

However, in the above-described conventional electrical double-layer capacitor cell in which a solid plate-like polarising electrode has been used, there was such a problem that the contact resistance between the solid plate-like polarising electrode and the collecting electrode is liable to become large.

### (Explanation of the Problem)

When the polarising electrode is made as a solid plate-like polarising electrode, although the contact of active carbon particles to each other becomes good and the contact resistance between the particles to each other diminishes, but the contact of the solid plate-like polarising electrode and the collecting electrode is ununiform, and the contact resistance between both of them is liable to become large. Then, the internal resistance in the case when it is considered as a whole of the electrical double-layer capacitor cell is unable to be prevented from becoming large.

For making the contact between the solid plate-like polarising electrode and the collecting electrode good, there can be considered such a method in which pressure is applied to the collecting electrode from outside and the solid plate-like polarising electrode is let forcedly be contacted.

However, then, there is such a danger that the solid plate-like polarising electrode is destructed by the force. Therefore, this method is unable to be abopted.

The present invention has the object of solving such a problem as described above.

### 4. Disclosure of the Invention

The first object of the present invention is to make the contact resistance between the solid plate-like polarising electrode and the collecting electrode in an electrical double-layer capacitor cell small.

The second object of the present invention is to make the pressure which should be applied from outside of the collecting electrode unnecessary, in an electrical double-layer capacitor cell.

The third object of the present invention is to make the material having high rigidity and thin thickness (for example, plastic material) usable as the material for the collecting electrode and the gasket, and thereby, to make the electrical double-layer capacitor cell be miniaturized

In order to attain those objects, in the present invention, there is provided an electrical double-layer capacitor cell in which there are equipped with a solid plate-like polarising electrodes arranged by being separated with a separator, and together with that, a paste-like polarising electrodes intervened between said solid plate-like polarising electrode and the collecting electrode.

These and other objects of the invention will become more apparent in the detailed description and examples which follow.

### 5. Brief Description of Drawings

Fig.1 is a diagram for showing the electrical double-layer capacitor cell according to the embodiment of the present invention;
Fig.2 is a diagram for showing the solid plate-like polarising electrode; and
Fig.3 is a diagram for showing the conventional electrical double-layer capacitor cell.

### 6. Best Mode of Carrying Out the Invention

In the following, the embodiment of the present invention will be explained in detail by being based on drawings.

In Fig.1 is shown the electrical double-layer capacitor cell according to the embodiment of the present invention, and in Fig.2, a solid plate-like polarising electrode.
Symbols are corresponded to those of Fig.3. Symbols 61 and 71 denote solid plate-like polarising electrodes made by sintering particle-like active carbon and an electrolytic liquid such as dilute sulfuric acid and the like is impregnated thereinto.

In the present invention, the polarising electrode is made in two layer structure, and in order to utilize such advantages that the handling is easy, and that the contact resistance between active carbon to each other is small, although almost all of the polarising electrodes are made in solid plate-like form, there are intervened paste-like polarising electrodes also.

Solid plate-like polarising electrodes 61 and 71 are arranged by being separated with a separator 5, and occupy almost all part of the polarising electrode. The paste-like polarising electrode 6 is thinly coated on the side to face the collecting electrode 1 of the solid plate-like polarising electrode 61 by use of the doctor knife method and the like.

Since the paste-like polarising electrode 6 is in a paste-like form, it contacts to both the collecting electrode 1 and the solid plate-like polarising electrode 61 well, and makes the contact resistance small.

Similarly, the paste-like polarising electrode 7 is also coated on the solid plate-like electrode 71, and makes the contact resistance between it and the collecting electrode 2 small.

Therefore, it has become no more necessary to apply pressure from the outside of the collecting electrode, in order to make contact resistance between the collecting electrode and the polarising electrode small. Therefore, the material having high rigidity and thin thickness (for example, plastics), which had the fear of being broken by the application of pressure, has become capable of being used in the collecting electrodes and gaskets. Since the thickness of the collecting electrode and the gasket can be made thin, the size of the whole electrical double-layer capacitor cell can be also made small.

Although the invention has been described in its preferred form with a certain degree of particularity, it is understood that the present disclosure of the preferred form has been changed in the details of construction and the combination and arranged of parts may be resorted to without departing from the scope of the invention as hereinafter claimed.

## Claims

1. An electrical double-layer capacitor provided with solid plate-like polarising electrodes (61,71) which are separated by a separator (5), and arranged between collecting electrodes (1,2) with intermediate layers between said solid plate-like polarising electrodes (61,71) and the collecting electrodes (1,2) characterised in that said intermediate layers are paste-like polarising electrodes (6,7).

## Patentansprüche

1. Ein elektrischer Doppelschicht-Kondensator, der mit festen plattenförmigen polarisierenden Elektroden (61, 71) versehen ist, die durch einen Separator (5) getrennt sind und zwischen Sammelelektroden (1, 2) einschließlich zwischenliegender Schichten zwischen den festen plattenförmigen polarisierenden Elektroden (61, 71) und den Sammelelektroden (1, 2) angeordnet sind, dadurch gekennzeichnet, daß die zwischenliegenden Schichten pastenförmige polarisierende Elektroden (6, 7) sind.

## Revendications

1. Condensateur électrique à deux couches, pourvu d'électrodes (61, 71) de polarisation analogues à des plaques pleines qui sont séparées par un séparateur (5) et agencées entre des électrodes collectrices (1, 2) avec des couches intermédiaires entre lesdites électrodes (61, 71) de polarisation analogues à des plaques pleines et les électrodes collectrices (1, 2), caractérisé en ce que lesdites couches intermédiaires sont des électrodes (6, 7) de polarisation analogues à de la pâte.
